# EUROPÄISCHE PATENTANMELDUNG

(11) **EP 0 936 644 A1**
(43) Veröffentlichungstag der Anmeldung: **18.08.1999**
(21) Anmeldenummer: 99100955.6
(22) Anmeldetag: 20.01.1999
(51) Int. Cl.: H01H 13/70

(54) **Sichtschutz für eine Eingabetastatur**

(30) Priorität: 13.02.1998 DE 29802500 U
(71) Anmelder: Siemens Nixdorf Retail and Banking Systems GmbH, 33106 Paderborn (DE)
(72) Erfinder: Kruse, Bernd, 33184 Buke (DE)
(74) Vertreter: Epping, Wilhelm, Dr.-Ing.

(57) **Zusammenfassung**

Sichtschutz für ein Eingabegerät, bestehend aus einer rechtwinklig abgewinkelten dünnen Wand und mindestens drei konusförmigen Haltern, die einen Schlitz aufweisen, in den die Unterkante der Wand eingreift.

## Beschreibung

Die Erfindung betrifft einen Sichtschutz für eine Eingabetastatur.

Insbesondere Tastaturen für die Eingabe von Schlüssein wie Geheimzahlen bei geldwerten Transaktionen benötigen einen Sichtschutz, um eine Ausspähung der eingegebenen Ziffern zu erschweren.

Dazu sind vielfach Wände um die Tastatur vorgesehen, die dem Gesamtdesign des gesamten, die Tastatur enthaltenden Geräts, entsprechen und meist integral angeformt sind.

Aufgabe der Erfindung ist es, einen auch nachträglich anbringbaren Sichtschutz für Eingabetastaturen anzugeben, der einfach im Aufbau ist und eine formschöne Gestaltung zuläßt.

Es handelt sich um einen Sichtschutz für ein Eingabegerät, bestehend aus einer rechtwinklig abgewinkelten dünnen Wand und mindestens drei konusförmigen Haltern, die einen Schlitz aufweisen, in den die Unterkante der Wand eingreift.

Der Sichtschutz kann insbesondere an einer in eine ebene Fläche eingelassenen Volltastatur, an deren rechter Seite üblicherweise ein Block von Zifferntasten angeordnet ist, zum Sichtschutz bei Eingaben von Ziffern verwendet werden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Es zeigen
- Fig. 1: einen Sichtschutz in perspektivischer Sicht,
- Fig. 2: denselben in Aufsicht,
- Fig. 3: einen Querschnitt durch ein Halter und
- Fig. 4: eine Seitenansicht der noch nicht gekanteten, aber bereits mit Haltern versehenen Wand.

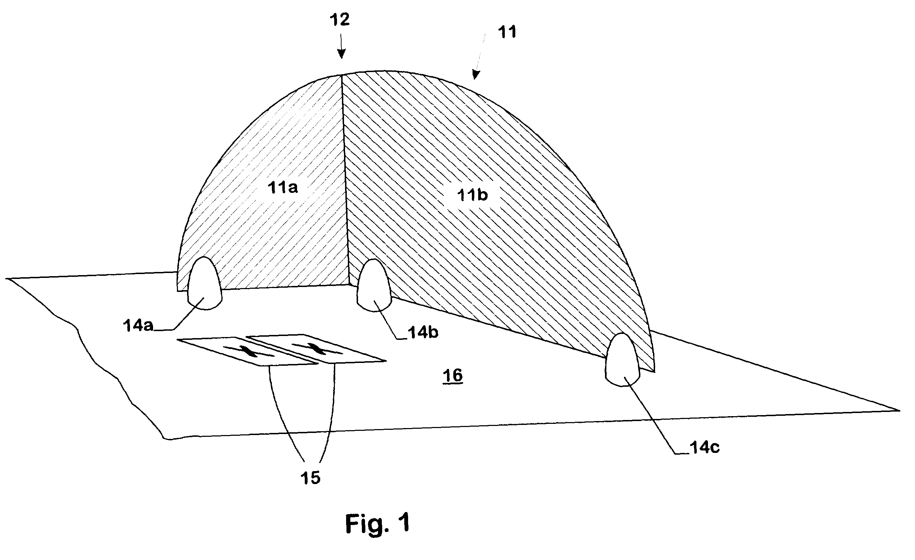

In Fig. 1 ist in perspektivischer Darstellung ein Sichtschutz, bestehend aus einer Wand 11 und Haltern 14, dargestellt, wobei die Wand aus zwei Flügeln 11a und 11b besteht. An der Unterkante sind Halter 14a, 14b und 14c vorgesehen, die weiter unten genauer beschrieben werden. Der gesamte Sichtschutz ist auf der ebenen Oberfläche 16 einer Tastatur dargestellt, von der prototypisch zwei Tasten 15 gezeigt sind.

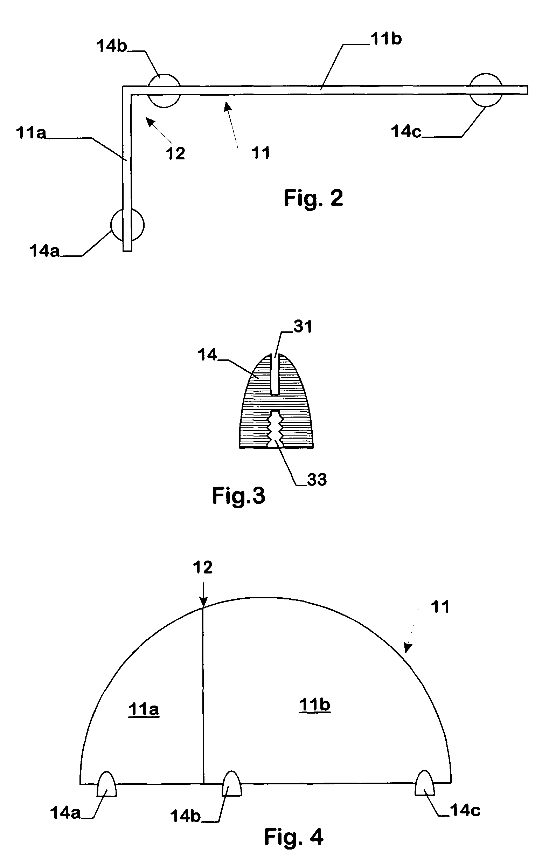

In Fig. 2 ist eine Aufsicht dargestellt, bei der die rechtwinklige Kante 12 der Wand deutlich wird. Anstelle der gezeigten Anordnung von drei Haltern können auch mehr als drei verwendet werden, wenn dies die gewünschte Stabilität oder ästhetische Gründe fordern.

In der bevorzugten Ausführungsform wird die Wand aus einem wie in Fig. 4 dargestellten Kreissegment hergestellt, welches beispielsweise aus 1mm starkem Edelstahl, dessen Kanten entgratet und gerundet sind. Die Oberfläche ist aus ästhetischen Gründen fein geschliffen. Die Kante 12 liegt asymmetrisch von der Mitte, um einen größeren Flügel 11b und einen kleineren Flügel 11a zu erhalten. Andere undurchsichtige Materialien wie Aluminium oder Kunststoffe, sind gleichfalls möglich.

Zur Befestigung sind Halter 14 vorgesehen, die bevorzugt die Form eines halben Rotationsellipsoids haben, wie in Fig. 3 im Querschnitt dargestellt. Eine zylindrische, prismatische oder andere Bauform ist auch möglich; die Auswahl richtet sich nach ästhetischen und fertigungstechnischen Gesichtspunkten. An der Oberseite ist ein Schlitz 31 vorgesehen, dessen Dicke der Dicke der Wand 10 entspricht, so daß die Flügel 11a, 11b, 11c in diesen Schlitz eingelassen werden können. Die Befestigung erfolgt in üblicher Art durch Kleben, Querbolzen oder Sicherungsschrauben.

Die Kalter 14 haben bevorzugt an der Unterseite ein Gewinde-Sackloch. Dies hat den Vorteil, daß eine Befestigung auf einer ebenen Tastaturoberfläche von unten erfolgen kann und eine Demontage nicht einfach möglich ist. Dies ist insbesondere im eingebauten Zustand der Fall, da der Schlitz 31 an der Oberseite ein Verdrehen verhindert.

## Patentansprüche

1. Sichtschutz für ein Eingabegerät, bestehend aus einer Wand (11) und Haltern (14), wobei
- die Wand (11) eine einstückige, rechtwinklig abgewinkelte dünne Platte ist, die damit aus zwei Flügeln (11a, 11b) besteht,
- mindestens drei Halter (14a, 14b, 14c) vorhanden sind, die auf die Oberfläche des Eingabegeräts aufzusetzen sind,
- die Halter (14) einen Schlitz (31) aufweisen, in den die Unterkante der Wand eingreift.

2. Sichtschutz nach Anspruch 1, wobei die Wand ein Kreissegment ist.

3. Sichtschutz nach Anspruch 1, wobei die Halter (14a, 14b, 14c) einem halben Rotationsellipsoiden ähneln.

4. Sichtschutz nach Anspruch 1 oder 3, wobei die Halter (14a, 14b, 14c) auf der dem Schlitz (31) gegenüberliegenden Seite ein Sackloch (33) mit Gewinde haben.
